# FASCICULE DE BREVET EUROPEEN

(11) **EP 0 617 217 B1**
(45) Date de publication et mention de la délivrance du brevet: **14.02.1996**
(21) Numéro de dépôt: 94400379.7
(22) Date de dépôt: 22.02.1994
(51) Int. Cl.: F16L 3/14, F16L 47/00, B29C 45/14

(54) **Conduit, en particulier pour véhicule automobile**
Rohr, insbesondere für ein Kraftfahrzeug
Pipe, in particular for a motor vehicle

(30) Priorité: 24.03.1993 FR 9303407
(43) Date de publication de la demande: 28.09.1994
(73) Titulaire: AUTOMOBILES PEUGEOT, F-75116 Paris (FR); AUTOMOBILES CITROEN, F-92200 Neuilly sur Seine (FR)
(72) Inventeur: Bronner, Jean-Claude, F-35000 Rennes (FR)
(74) Mandataire: Beauchamps, Georges

(56) Documents cités:
- FR-A- 1 175 789
- GB-A- 692 025
- GB-A- 1 074 849
- US-A- 3 776 495
- US-A- 5 092 632

## Description

La présente invention concerne un conduit en particulier pour véhicule automobile.

Les conduits destinés au transport de fluide placés par exemple sous le capot d'un véhicule automobile sont maintenus en position et fixés sur un support du châssis du véhicule de façon connue par des brides ou pattes de fixation en caoutchouc ou en plastique surmoulées sur le conduit et pouvant comporter une armature métallique. Afin d'éviter la déformation du raccord ou conduit sous l'effet de la pression d'injection du caoutchouc ou du thermoplastique pendant l'opération de surmoulage, il est connu d'introduire dans le raccord à surmouler un élément dit "noyau" métallique ou en plastique, positionné à l'intérieur du conduit à l'endroit du surmoulage pendant l'opération de surmoulage et retiré après cette opération.

On comprend bien que la mise en place de ce noyau amovible, est délicate et ceci d'autant plus que le raccord à surmouler présente une forme complexe, c'est-à-dire principalement lorsque le conduit est long et comporte de nombreux coudes, d'où il résulte un coût de fabrication de ces surmoulages particulièrement élevé.

La présente invention résout ces problèmes et propose un conduit destiné à être fixé sur un support de véhicule automobile, de conception particulièrement simple, et permettant de réduire considérablement- les coûts de fabrication du surmoulage de fixation du conduit sur le support du châssis de véhicule précité.

A cet effet, la présente invention a pour objet un conduit, en particulier pour véhicule automobile, du genre comprenant un surmoulage de fixation du conduit sur un support en particulier d'un véhicule, ce conduit étant caractérisé en ce qu'il comprend une bague fendue serrée autour de la partie extérieure du conduit et sur laquelle est réalisé le surmoulage.

Suivant une réalisation particulière, le surmoulage comporte une armature formant une patte de fixation.

Avantageusement, cette armature est métallique.

Selon une caractéristique particulière, le surmoulage est réalisé dans un moule prenant appui sur les deux extrémités de la bague afin d'éviter que le matériau de surmoulage ne déborde sur le conduit.

Suivant une autre caractéristique, le surmoulage est réalisé en un matériau compris dans le groupe comprenant un matériau thermoplastique, un matériau thermodurcissable, un élastomère vulcanisable adhérisé, un élastomère vulcanisable non adhérisé.

De préférence, la bague fendue est réalisée en un matériau plastique, métallique, un élastomère réticulé ou en un matériau thermodurcissable.

Suivant une réalisation particulière, la bague fendue est auto-serrante et comporte une butée de limitation.

Suivant une variante de réalisation, la bague fendue est perforée et comporte une gorge intérieure.

Suivant une autre variante de réalisation, la bague fendue comporte au moins une gorge extérieure.

Suivant une variante de réalisation, la bague fendue comporte un amincissement formant charnière, à l'opposé de la fente, de façon à faciliter son ouverture et son montage sur le tube.

Selon une autre caractéristique, le surmoulage n'étant pas adhérisé à la bague, ce surmoulage peut tourner autour de la bague, sous l'action d'un effort, de manière à permettre l'orientation de la bague de fixation.

Suivant une autre réalisation, le surmoulage est réalisé en un élastomère vulcanisable adhérisé à la bague et peut tourner avec cette bague autour du conduit, sous l'action d'un effort exercé sur la bague de manière à orienter la patte de fixation.

Suivant une autre réalisation particulière, le conduit est solidarisé à d'autres conduits par un même surmoulage réalisé sur plusieurs bagues fendues correspondantes ou une bague fendue de forme complexe entourant les différents conduits, avec patte métallique incorporée ou non au surmoulage.

Mais d'autres avantages et caractéristiques de l'invention apparaîtront mieux dans la description détaillée qui suit et se réfère aux dessins annexés donnés uniquement à titre d'exemples et dans lesquels.

La figure 1 est une vue en perspective d'un conduit conforme à l'invention, sur lequel a été surmoulée une patte de fixation.

La figure 2 est une vue partielle, en coupe longitudinale, du conduit de la figure 1, selon une première réalisation de l'invention.

La figure 3 est une vue en coupe suivant III-III de la figure précédente.

La figure 4 est une vue partielle, en coupe longitudinale, d'un moule dans lequel est réalisé le surmoulage du conduit précité.

Les figures 5 et 6 sont respectivement une vue partielle en coupe longitudinale, et une vue en perspective, illustrant une seconde réalisation de la bague conforme à l'invention.

Les figures 7 et 8 sont respectivement une vue partielle en coupe longitudinale et une vue en perspective, illustrant une troisième réalisation de la bague conforme à l'invention.

Les figures 9 et 10 sont respectivement une vue partielle en coupe longitudinale et une vue en perspective, d'une quatrième réalisation de la bague conforme à l'invention.

La figure 11 est une vue en perspective illustrant deux conduits reliés par un surmoulage commun conformément à l'invention.

Les figures 12 et 13 sont respectivement une vue partielle en coupe axiale et une vue en coupe transversale de la figure 11.

La figure 14 représente une autre réalisation de la bague fendue dans laquelle elle comporte un amincissement formant charnière.

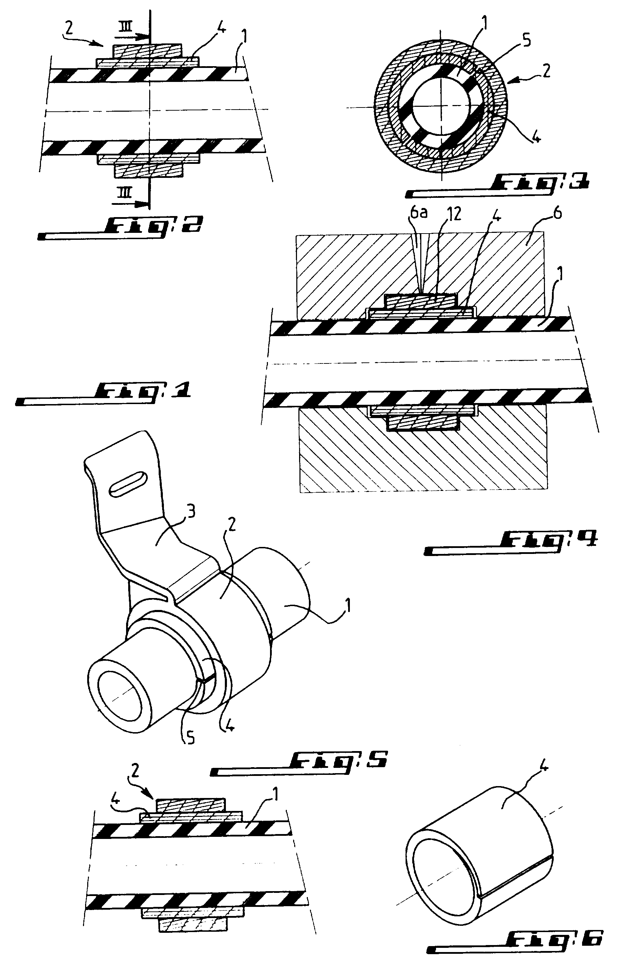

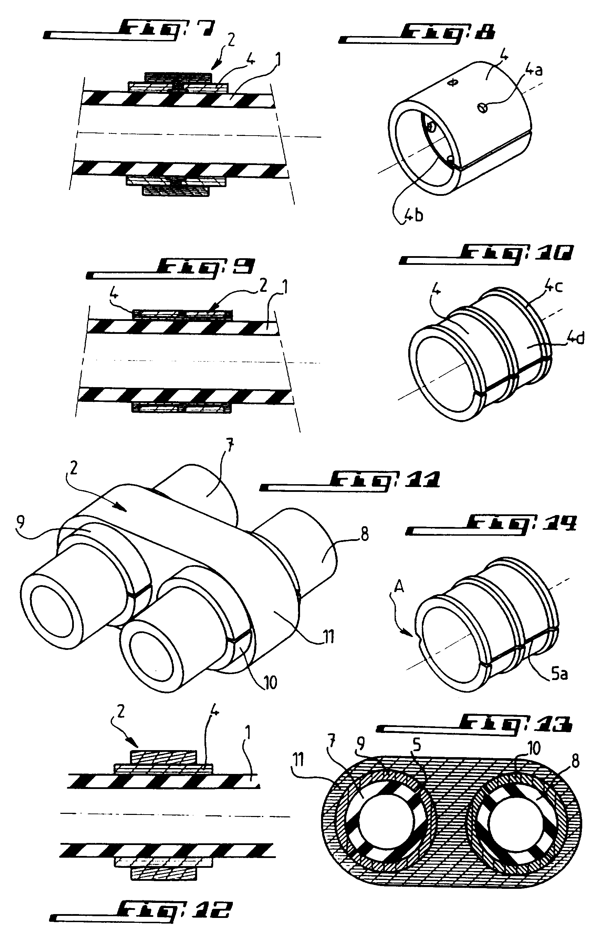

Sur les figures 1, 2 et 3, on voit un conduit 1, ou raccord souple, pour le transport d'un liquide, destiné à être fixé sur un support situé sous le capot d'un véhicule automobile, par l'intermédiaire d'un surmoulage 2 en caoutchouc ou en plastique réalisé autour du conduit 1 et formant une patte de fixation 3 du conduit 1 sur le support précité.

Suivant une réalisation particulière de l'invention, une bague 4 comportant une fente longitudinale simple 5 est placée autour du conduit 1 avant l'opération de surmoulage, le surmoulage 2 étant réalisé autour de cette bague 4 pour former la patte précitée 3.

En se référant aux figures 5 et 6, on voit que la bague 4 entourant le conduit 1 est une bague auto-serrante comportant une butée de limitation, ladite bague 4 exerçant une force de serrage sur le conduit 1 supérieure à celle de la bague fendue de la figure 1, de façon à permettre de s'affranchir des variations de cotes du diamètre extérieur du conduit souple 1.

En se référant aux figures 7 et 8, on voit que selon une seconde réalisation de l'invention, la bague fendue 4 est une bague perforée 4a comportant une gorge intérieure 4b.

En se référant aux figures 9 et 10, on voit que selon une troisième réalisation, la bague 4 comporte sur sa surface extérieure, des épaulements 4c ou des gorges extérieures 4d sur lesquels épaulements s'appuie le moule 6 visible sur la figure 4 pour réaliser le serrage de la bague 4 sur le conduit 1 afin d'éviter l'infiltration du matériau de surmoulage 12 entre la bague 4 et le conduit 1. La figure 14 illustre encore une autre réalisation de la bague, celle-ci comportant un amincissement A à l'opposé de la fente 5a, permettant de faciliter son ouverture et son montage sur le tube.

En se référant aux figures 11, 12 et 13, on voit deux conduits 7, 8 comportant respectivement deux bagues 9 et 10 à fente longitudinale simple 5 conformes à la première réalisation de l'invention, et sur lesquelles une bride de maintien en position unique 11 a été surmoulée.

On notera que les différents types de bagues permettent de s'affranchir de tolérance de diamètre du tube à réaliser.

On notera également que la bague décrite selon l'une quelconque des réalisations précédentes pourra être métallique ou être réalisée en plastique chargé ou non ou en caoutchouc vulcanisé, ou bien en un élastomère réticulé ou thermodurcissable.

Le matériau de surmoulage sera avantageusement un matériau thermoplastique, un matériau thermodurcissable un élastomère vulcanisable adhérisé ou non à la bague par l'intermédiaire d'un adhésif spécifique.

On notera que les conduits conformes à l'invention destinés à relier deux appareils dans un véhicule automobile présentent des formes complexes comportant notamment des coudes, que la bague munie du surmoulage est située sur une partie cylindrique du conduit, et que la patte de fixation doit avoir une orientation bien définie par rapport au support. Au lieu de réaliser en conséquence le moule de surmoulage, il est plus simple de prévoir un surmoulage qui peut pivoter sous l'effet d'un certain effort autour de la bague, de manière à orienter la patte, ou bien autour du conduit.

Dans le cas de l'utilisation d'un surmoulage réalisé en élastomère vulcanisable adhérisé à la bague 4, le surmoulage pourra être entraîné en rotation avec la bague 4 autour du conduit 1 de manière à permettre l'orientation souhaitée de la patte de fixation 3.

Dans le cas au contraire où le surmoulage 2 n'est pas adhérisé à la bague 4, l'orientation de la patte de fixation 3 est obtenue en faisant tourner le surmoulage 2 autour de la bague 4.

Ainsi, selon la matière utilisée pour la bague fendue 4 (métal ou plastique) et ses dimensions, le surmoulage 2 pourra tourillonner sous l'effet d'un effort plus ou moins important autour du raccord souple 1, de façon à éviter un indexage systématique dans le moule de surmoulage 2.

On décrira ci-après la réalisation du surmoulage 2 autour du conduit 1 selon l'invention en référence plus particulièrement à la figure 4.

Sur cette figure, on voit qu'après engagement de la bague fendue 4 autour du conduit 1, par écartement de la fente 5, la bague 4 est maintenue sur le conduit 1 par serrage, lequel serrage est plus effectif lorsque la bague est auto-serrante. L'ensemble constitué du conduit 1 et de la bague 4 est alors introduit dans le moule 6, lequel prend appui sur les deux extrémités de la bague de manière à fermer cette dernière sur le raccord 1 afin d'éviter les infiltrations de la matière surmoulée 12 entre la bague 4 et le raccord 1 pouvant engendrer des déformations plus ou moins importantes du raccord 1.

Le matériau de surmoulage 12 est alors introduit dans l'ouverture 6a du moule 6 afin de réaliser un surmoulage formant un élément de fixation, ceci étant réalisé sans engendrer de déformation (écrasement) du tube 1 sous l'effet de la pression d'injection de la matière surmoulée.

On notera également que différentes formes de surmoulage pourront être réalisées, telles que le surmoulage avec patte de fixation intégrée, surmoulage d'une bride de maintien en position d'un ou de plusieurs raccords souples, etc...

On remarquera que la bague pourra être simple ou complexe selon que un ou plusieurs tubes seront inclus dans le surmoulage.

L'épaisseur de la bague sera de préférence comprise entre 5 dixièmes de millimètre et plusieurs millimètres.

La bague pourra également être réalisée en un matériau coloré suivant la codification de couleur utilisée sur le raccord souple. De la même manière, le choix du matériau de la bague pourra être identique à celui du surmoulage dans le cas où celui-ci est du plastique pour des considérations de recyclage.

L'invention permet donc de réaliser un surmoulage en caoutchouc ou en plastique sur des raccords souples sans qu'il soit nécessaire d'introduire un noyau amovible dans le raccord afin d'éviter sa déformation lors de l'opération d'injection de la matière surmoulée, d'où il résulte une réduction considérable des coûts de fabrication de ces surmoulages.

## Revendications

1. Conduit (1), en particulier pour véhicule automobile, du genre comprenant un surmoulage (2) de fixation du conduit sur un support en particulier d'un véhicule, caractérisé en ce qu'il comprend une bague fendue (4) serrée autour de la partie extérieure du conduit (1) et sur laquelle est effectué le surmoulage (2).

2. Conduit selon la revendication 1, caractérisé en ce que le surmoulage (2) comporte une armature formant une patte de fixation (3).

3. Conduit selon la revendication 2, caractérisé en ce que cette armature est métallique.

4. Conduit selon l'une quelconque des revendications 1 à 3, caractérisé en ce que le surmoulage (2) est réalisé dans un moule (6) prenant appui sur les deux extrémités de la bague (4) afin d'éviter que le matériau de surmoulage (12) ne déborde sur le conduit (1).

5. Conduit selon l'une quelconque des revendications précédentes, caractérisé en ce que le surmoulage (2) est réalisé en un matériau compris dans le groupe comprenant un matériau thermoplastique, un matériau thermodurcissable, un élastomère vulcanisable adhérisé, et un élastomère vulcanisable non adhérisé.

6. Conduit selon l'une quelconque des revendications 1 à 5, caractérisé en ce que la bague fendue (4) est réalisée en un matériau compris dans le groupe comprenant un matériau plastique, un matériau métallique, un élastomère réticulé, un élastomère thermodurcissable.

7. Conduit selon l'une quelconque des revendications 1 à 6, caractérisé en ce que la bague fendue (4) est auto-serrante et comporte une butée de limitation.

8. Conduit selon l'une quelconque des revendications 1 à 6, caractérisé en ce que la bague fendue (4) est perforée (4a) et comporte une gorge intérieure (4b).

9. Conduit selon l'une quelconque des revendications 1 à 6, caractérisé en ce que la bague fendue (4) comporte au moins une gorge extérieure (4d).

10. Conduit selon l'une quelconque des revendications 2 à 9, caractérisé en ce que le surmoulage (2) n'étant pas adhérisé à la bague (4), ce surmoulage (2) peut tourner autour de la bague (4) sous l'action d'un effort, de manière à permettre l'orientation de la patte de fixation (3).

11. Conduit selon l'une quelconque des revendications 2 à 9, caractérisé en ce que le surmoulage (2) est réalisé en un élastomère vulcanisable adhérisé à la bague (4) et peut tourner avec la bague (4) autour du conduit (1) sous l'action d'un effort exercé sur cette bague (4) de manière à orienter la patte de fixation (3).

12. Conduit (7) selon l'une quelconque des revendications précédentes, caractérisé en ce qu'il est solidarisé à d'autres conduits (8) par un même surmoulage (11) réalisé sur plusieurs bagues fendues correspondantes (9, 10) ou une bague fendue de forme complexe entourant les différents conduits, avec patte métallique (3) incorporée ou non au surmoulage (2).

13. Conduit selon l'une quelconque des revendications 1 à 6, caractérisé en ce que la bague fendue comporte un amincissement (A) formant charnière, à l'opposé de la fente (5a).

## Patentansprüche

1. Rohrleitung (1) insbesondere für ein Kraftfahrzeug, der einen angeformten Mantel (2) zur Befestigung der Rohrleitung an einem Halter insbesondere eines Kraftfahrzeuges aufweisenden Gattung, dadurch gekennzeichnet, dass sie einen um den Aussenteil der Rohrleitung (1) festgespannten Schlitzring (4), an welchem der angeformte Mantel (2) hergestellt wird, aufweist.

2. Rohrleitung nach Anspruch 1, dadurch gekennzeichnet, dass der angeformte Mantel (2) eine einen Befestigungslappen (3) bildende Ansatzknagge aufweist.

3. Rohrleitung gemäss Anspruch 2, dadurch gekennzeichnet, dass diese Ansatzknagge metallisch ist.

4. Rohrleitung nach irgendeinem der Ansprüche 1 bis 3, dadurch gekennzeichnet, dass der angeformte Mantel (2) in einer sich an den beiden Enden des Ringes (4) abstützenden Gussform (6) hergestellt wird, um zu vermeiden, dass der ausgegossene Mantelwerkstoff (12) auf die Rohrleitung (1) ausfliesst.

5. Rohrleitung gemäss irgendeinem der vorangehenden Ansprüche, dadurch gekennzeichnet, dass der angeformte Mantel (2) aus einem in der einen thermoplastischen Werkstoff, einen hitzehärtbaren Werkstoff, ein anhaftend gemachtes vulkanisierbares Elastomer und ein vulkanisierbares nicht anhaftend gemachtes Elastomer umfassenden Gruppe gewählten Werkstoff hergestellt wird.

6. Rohrleitung nach irgendeinem der Ansprüche 1 bis 5, dadurch gekennzeichnet, dass der Schlitzring (4) aus einem in der einen Kunststoff, einen metallischen Werkstoff, ein vernetztes Elastomer, ein hitzehärtbares Elastomer umfassenden Gruppe gewählten Werkstoff hergestellt wird.

7. Rohrleitung gemäss irgendeinem der Ansprüche 1 bis 6, dadurch gekennzeichnet, dass der Schlitzring (4) selbstklemmend ist und einen Begrenzungsanschlag aufweist.

8. Rohrleitung nach irgendeinem der Ansprüche 1 bis 6, dadurch gekennzeichnet, dass der Schlitzring (4) durchbohrt (4a) ist und eine innere Ringnut (4b) aufweist.

9. Rohrleitung nach irgendeinem der Ansprüche 1 bis 6, dadurch gekennzeichnet, dass der Schlitzring (4) wenigstens eine äussere Ringnut (4d) aufweist.

10. Rohrleitung nach irgendeinem der Ansprüche 2 bis 9, dadurch gekennzeichnet, dass, da der angeformte Mantel (2) nicht an dem Ring (4) anhaftet, dieser angeformte Mantel (2)um den Ring (4) herum unter der Wirkung einer Kraft drehen kann, um die Ausrichtung des Befestigungslappens (3) zu gestatten.

11. Rohrleitung nach irgendeinem der Ansprüche 2 bis 9, dadurch gekennzeichnet, dass der angeformte Mantel (2) aus einem an dem Ring (4) anhaftenden vulkanisierbaren Elastomer hergestellt ist und zusammen mit dem Ring (4) um die Rohrleitung (1) herum unter der Wirkung einer auf diesen Ring (4) ausgeübten Kraft drehen kann, um den Befestigungslappen (3) auszurichten.

12. Rohrleitung (7) nach irgendeinem der vorangehenden Ansprüche, dadurch gekennzeichnet, dass sie mit anderen Rohrleitungen (8) durch einen an mehreren entsprechenden Schlitzringen (9, 10) oder an einem die verschiedenen Rohrleitungen umgebenden Schlitzring verwickelter Gestalt hergestellten selben angeformten Mantel (11) mit einem in den angeformten Mantel (2) entweder eingegliederten oder nicht eingegliederten metallischen Lappen (3) fest verbunden ist.

13. Rohrleitung nach irgendeinem der Ansprüche 1 bis 6, dadurch gekennzeichnet, dass der Schlitzring einen ein Scharnier bildenden, dem Schlitz (5a) entgegengesetzten verdünnten Abschnitt (A) aufweist.

## Claims

1. Pipe (1) in particular for an automotive vehicle of the kind comprising a mantle casting (2) for the fastening of the pipe onto a support in particular of a vehicle, characterized in that it comprises a split ring (4) clamped about the external portion of the pipe (1) and onto which the mantle casting molding (2) is made.

2. Pipe according to claim 1, characterized in that the mantle casting (2) comprises a strap forming a fastening lug (3).

3. Pipe according to claim 2, characterized in that this strap is metallic.

4. Pipe according to any one of claims 1 to 3, characterized in that the mantle casting (2) is made in a mold (6) bearing upon both ends of the ring (4) in order to avoid that the mantle casting material (12) runs over onto the pipe (1).

5. Pipe according to any one of the foregoing claims, characterized in that the mantle casting (2) is made from a material comprised in the group comprising a thermoplastic material, a thermosetting material, a vulcanizable elastomer made adhesive and a vulcanizable elastomer not made adhesive.

6. Pipe according to any one of claims 1 to 5, characterized in that the split ring (4) is made from a material comprised in the group comprising a plastics material, a metallic material, a cross-linked elastomer and a thermosetting elastomer.

7. Pipe according to any one of claims 1 to 6, characterized in that the split ring (4) is self-clamping and comprises a limiting stop.

8. Pipe according to any one of claims 1 to 6, characterized in that the split ring (4) is perforated (4a) and comprises an inner circular groove.

9. Pipe according to any one of claims 1 to 6, characterized in that the split ring (4) comprises at least one outer circular groove (4d).

10. Pipe according to any one of claims 2 to 9, characterized in that since the mantle casting (2) does not adhere to the ring (4), this mantle casting (2) may turn about the ring (4) under the action of a force so as to permit the orientation of the fastening lug (3).

11. Pipe according to any one of claims 2 to 9, characterized in that the mantle casting (2) is made from a vulcanizable elastomer adhered to the ring (4) and may turn together with the ring (4) about the duct (1) under the action of a force exerted upon this ring (4) so as to orient the fastening lug (3).

12. Pipe (7) according to any one of the foregoing claims, characterized in that it is made fast to other pipes (8) by a same mantle casting (11) provided on several corresponding split rings (9, 10) or one split ring of complex shape surrounding the different pipes with the metallic lug (3) being either incorporated or not incorporated into the mantle casting (2).

13. Pipe according to any one of claims 1 to 6, characterized in that the split ring comprises a thinned portion (A) forming a hinge on the side opposite to the slit (5a).
